# EUROPEAN PATENT SPECIFICATION

(11) **EP 1 816 022 B1**
(45) Date of publication and mention of the grant of the patent: **05.08.2009**
(21) Application number: 07101422.9
(22) Date of filing: 30.01.2007
(51) Int. Cl.: B60K 13/02

(54) **Apparatus and method for transmitting air intake sound**
Vorrichtung und Verfahren zum Übertragen des Luftansaugschalls
Appareil et procédé de transmission du son de l'entrée d'air

(30) Priority: 31.01.2006 JP 2006023517; 11.12.2006 JP 2006333379
(43) Date of publication of application: 08.08.2007
(73) Proprietor: Nissan Motor Company Limited, Kanagawa-ku Yokohama-shi, Kanagawa 221-0023 (JP)
(72) Inventor: Miyake, Tatsuya, Atsugi-shi Kanagawa 243-0192 (JP); Urata, Akane, Atsugi-shi Kanagawa 243-0192 (JP)
(74) Representative: Holmes, Matthew William

(56) References cited:
- EP-A2- 1 138 887
- DE-A1- 10 016 104
- DE-A1- 19 922 216

## Description

The present disclosure relates to an apparatus and method for transmitting air intake sound and particularly, but not exclusively, for transmitting air intake sounds to an interior of a vehicle. Aspects of the invention relate to an apparatus, to a device, to a method and to a vehicle.

Conventionally, efforts have been made to reduce air intake sound since it is considered to be undesirable external noise to vehicle occupants. However, in recent years, there have been attempts made to produce a specific sound inside a vehicle by intentionally allowing vehicle occupants to hear the air intake sound.

Japanese Unexamined Patent Application Publication No. 2004-218458 discloses an example of a technique for transmitting an air intake sound of an engine to the interior of a vehicle. In this technique, an engine room is separated into first and second engine rooms. The second engine room is located proximate to a dash panel and the first engine room is located adjacent to the second engine room. An inlet of the engine that is disposed inside the first engine room is connected to a fresh-air inlet by an intake pipe. The intake pipe has an opening in a sidewall thereof, which is located proximate to the fresh-air inlet. The opening and an upper plate of a dash panel located proximate to the driver's seat are connected to each other with a flexible tube that extends from the first engine room into the second engine room through the inside of a fender. Pressure fluctuation of an air intake sound in the intake channel is transmitted to the dash panel via the flexible tube, causing the dash panel to vibrate and producing sound. As a result, air intake sound is transmitted to the interior of the vehicle.

Similar arrangements are described in DE199 22 216, EP1,138,887 and DE100 16 104.

While the above-described conventional techniques produce sound, the range for sound amplification is small. Accordingly, there are instances where the sound does not reach a desired sound level for the vehicle occupants.

It is an aim of the invention to address this issue and to improve upon known technology. Other aims and advantages of the invention will become apparent from the following description, claims and drawings.

Aspects of the invention therefore provide an apparatus, a method and a vehicle as claimed in the appended claims.

In an embodiment, an air intake sound transmission device of a vehicle comprises an engine hood having a vibratory portion and an intake channel that connects an inlet of an engine to a fresh-air inlet, wherein the intake channel further includes an opening positioned at an intermediate section thereof, wherein the opening faces the engine hood, and wherein pressure fluctuations in the intake channel caused by operation of the engine is transmitted to the vibratory portion of the engine hood through the opening so as to vibrate the vibratory portion.

In an embodiment, the intake channel comprises an intake pipe and an extended portion, wherein the extended portion is in communication with the opening.

In an embodiment, the intake channel includes a filter disposed in the intermediate section thereof, and wherein the opening is disposed between the fresh-air inlet and the filter.

In an embodiment, the intake channel includes a branch channel and wherein the branch channel has the opening positioned at a tip end of the branch channel.

In an embodiment, the intake channel further comprises an extended portion positioned at the intermediate section and wherein the extended portion is connected to a base end of the branch channel.

In an embodiment, the extended portion comprises an air-cleaner box containing a filter.

The device may comprise an elastic member that is disposed so as to surround a periphery of the opening, wherein the elastic member extends towards the engine hood and includes an end that is in contact with the engine hood.

In an embodiment, the engine hood further comprises a low rigidity portion.

In an embodiment, the low rigidity portion of the engine hood extends around a periphery of the vibratory portion.

In an embodiment, a method of transmitting an air intake sound comprises introducing air into an engine through an intake channel and transmitting a pressure fluctuation in the intake channel to a vibratory portion of an engine hood so as to vibrate the vibratory portion to amplify sound.

In an embodiment, an air intake sound transmission device for a vehicle comprises an intake channel that connects an inlet of an engine to a fresh-air inlet and a pipe that communicates with the intake channel, wherein the pipe includes an opening that faces a vibratory portion of an engine hood.

In an embodiment, an air intake sound transmission device for a vehicle comprises an elastic member that is disposed so as to surround a periphery of the opening of an intake channel that connects an inlet of an engine to a fresh-air inlet, wherein the elastic member extends towards a vibratory portion of an engine hood and has an end that contacts the vibratory portion.

For example, an air intake sound transmission device of a vehicle comprises an intake channel and an engine hood. The engine hood may have a vibratory portion. The intake channel may connect an inlet of an engine to a fresh-air inlet. The intake channel may further include an opening positioned at an intermediate section thereof. The opening may face the engine hood and transmits pressure fluctuations in the intake channel caused by operation of the engine to the vibratory portion of the engine hood.

Within the scope of this application it is envisaged that the various aspects, embodiments, examples and alternatives set out in the preceding paragraphs, in the claims and/or in the following description, may be taken individually or in any combination thereof.

The present invention will now be described, by way of example only, with reference to the accompanying drawings in which:
Fig. 1 is a plan view showing a configuration of an air intake sound transmission device according to a first embodiment;
Fig. 2 is a cross-sectional view taken along line II-II in Fig. 1.
Fig. 3 is a graph that illustrates a relationship between a sound pressure level and a first order component of revolution for every combustion;
Fig. 4 is a plan view showing a configuration of an air intake sound transmission device according to a second embodiment; and
Fig. 5 is a cross-sectional view taken along line V-V in Fig. 4.

While the claims are not limited to the illustrated embodiments, an appreciation of various aspects of the system is best gained through a discussion of various examples thereof. Referring now to the drawings, illustrative embodiments are shown in detail. Although the drawings represent the embodiments, the drawings are not necessarily to scale and certain features may be exaggerated to better illustrate and explain an innovative aspect of an embodiment. Further, the embodiments described herein are not intended to be exhaustive or otherwise limiting or restricting to the precise form and configuration shown in the drawings and disclosed in the following detailed description. Embodiments of the present invention are described in detail by referring to the drawings as follows.

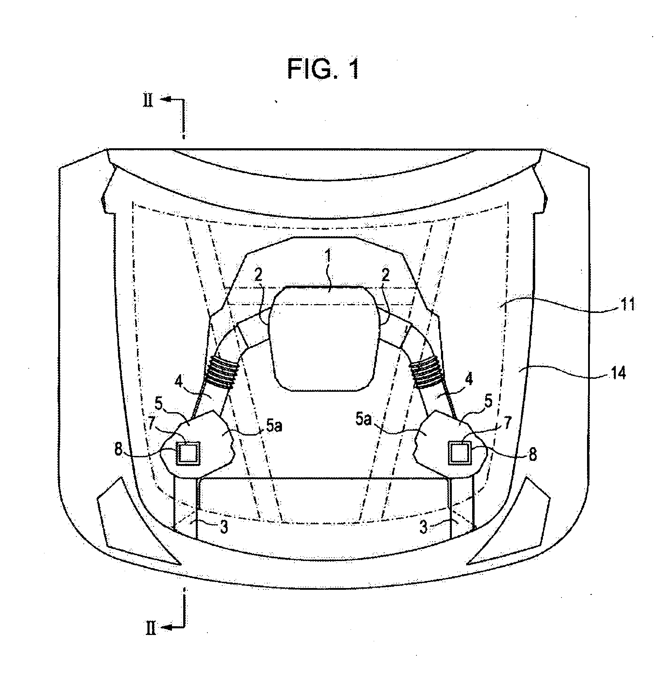

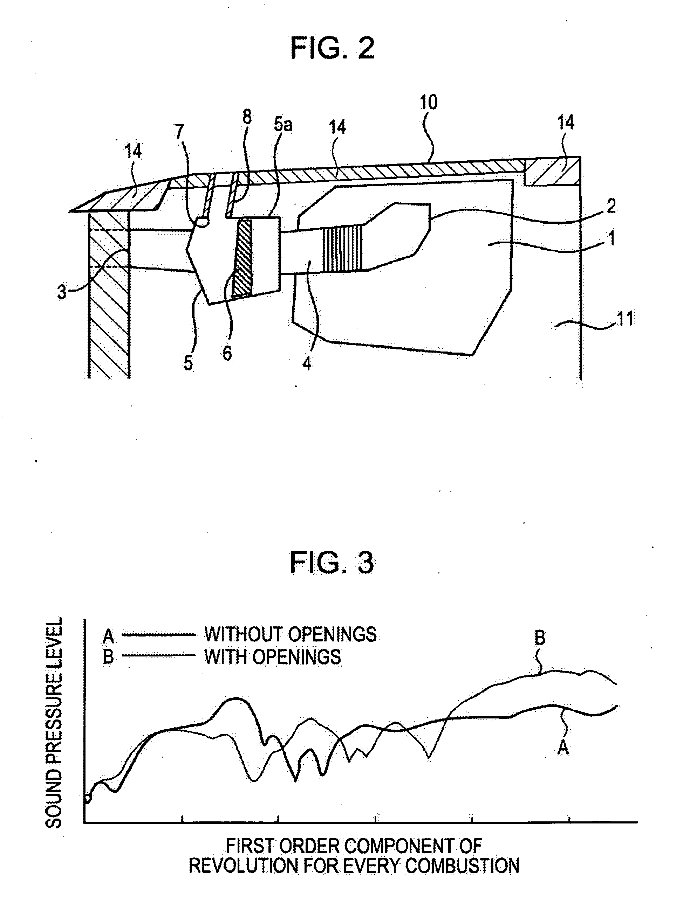

Referring to Figs. 1 and 2, the configuration of a first embodiment of an air intake sound transmission device for a vehicle will be described in detail. In the first embodiment, an engine 1 is disposed inside an engine room 11. The engine 1 has left and right inlets 2 that are respectively connected to left and right fresh-air inlets 3 by left and right intake pipes 4. In one embodiment, the fresh-air inlets 3 are located at the front side of the vehicle. An intermediate section of each intake pipe 4 is provided with an air-cleaner box 5. The air-cleaner box 5 serves as an extended portion having a hollow section that is larger than that of the intake pipe 4 (see, e.g., Fig. 2). Each air-cleaner box 5 contains a filter 6 for preventing foreign material from entering the engine 1. The intake pipes 4 and the air-cleaner boxes 5 comprise intake channels.

As shown in Figs. 1 and 2, each air-cleaner box 5 has an upper plate 5a that faces an engine hood 10 disposed thereabove. The upper plate 5a further has an opening 7 for transmitting vibration from the intake channel. The opening 7 is disposed in the upper plate 5a in a manner such that the opening 7 is positioned between the fresh-air inlet 3 and the filter 6.

Furthermore, the periphery of each opening 7 is surrounded by a tubular elastic member 8. The tubular elastic member 8 has an axis extending therethrough that extends in the vertical direction and has an upper hollow end and a lower hollow end. The lower hollow end is fixed to the air-cleaner box 5 around the opening 7. The upper hollow end of the tubular elastic member 8 extends towards the engine hood 10 disposed thereabove. The length of the elastic member 8 is set such that the upper hollow end of the elastic member 8 is in contact with the engine hood 10 when the engine hood 10 is closed. The inner surface of the engine hood 10, that is, the surface proximate to the engine room 11, is provided with a reinforcement member 14 for reinforcing the engine hood 10, thereby increasing the rigidity of the engine hood 10. From a top view of the vehicle, the vibration-transmission openings 7 and the upper hollow ends of the elastic members 8 are located at positions where they do not to overlap with the position of the reinforcement member 14. In other words, the vibration-transmission openings 7 and the upper hollow ends of the elastic members 8 are provided where the rigidity of the engine hood 10 is relatively low.

To improve contact between the elastic members 8 and the engine hood 10, the length of each of the elastic members 8 is conveniently set such that when the upper hollow end of the elastic member 8 is in contact with the closed engine hood 10, the elastic member 8 is slightly compressed in the vertical direction due to a downward pressing force of the engine hood 10.

The lower hollow end of each tubular elastic member 8 may be fixed to the top surface of the upper plate 5a of the corresponding air-cleaner box 5 by a mounting bracket or by bonding. As a further alternative, the lower hollow end of each tubular elastic member 8 may be partially or entirely press-fit in the corresponding opening 7.

Furthermore, while Fig. 1 depicts the cross-sectional shape of the openings 7 and the tubular elastic members 8 as being square-shaped, it is understood that the openings 7 and tubular elastic members 8 do not necessarily need to be square-shaped, nor do they need to be circular. Further, it is also not necessary that the openings 7 and corresponding tubular elastic members 8 have corresponding shapes. Moreover, the hollow section of the elastic members 8 does not have to be constant in the vertical direction. For example, the elastic members 8 may be conical such that the hollow section thereof increases towards the engine hood 10. Furthermore, the vertical axis of the elastic members 8 does not necessarily have to extend in the vertical direction. For example, the axis may have a lower axis portion that extends vertically and an upper axis portion that is slanted towards a dash panel in one of the front, rear, left, and right directions.

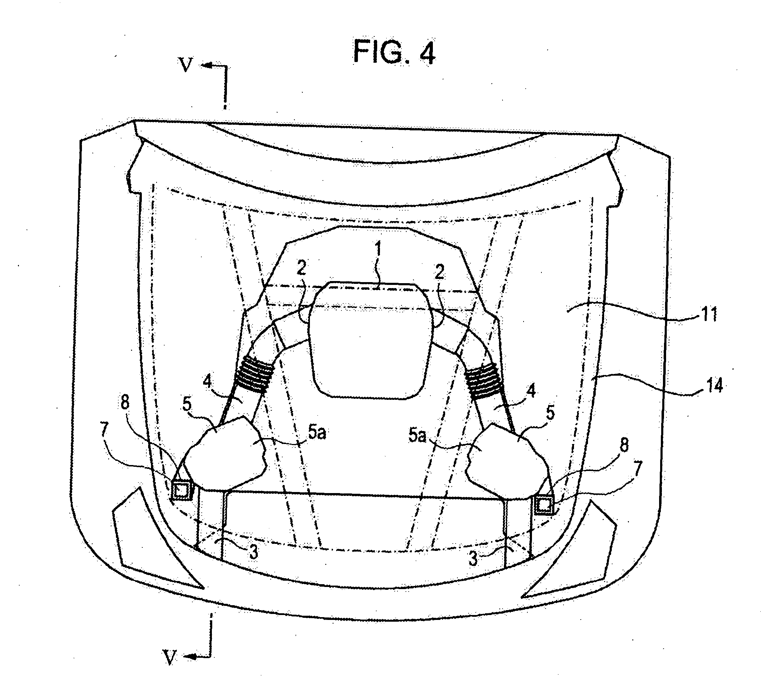

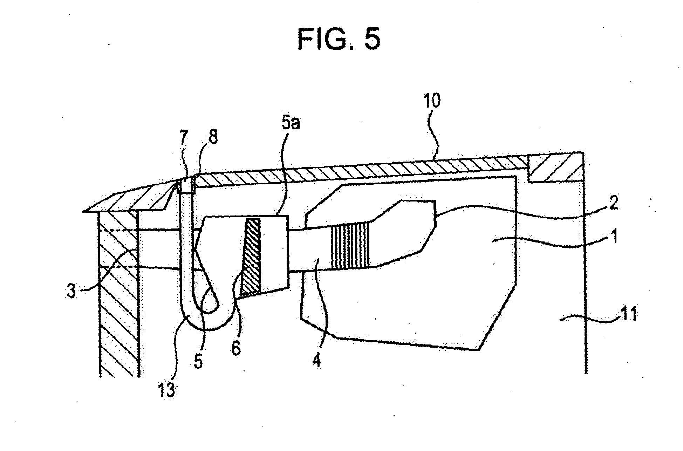

Furthermore, the openings 7 that face the engine hood 10 do not necessarily have to be provided directly in the intake pipes 4. For example, referring to Figs. 4 and 5, each of the intake channels may additionally include a branch pipe (branch channel) 13. Each of the branch pipes 13 is connected to the corresponding intake pipe 4 (namely, the corresponding air-cleaner box 5 in this embodiment) and has one of the openings 7 facing the engine hood 10 at the tip end of the branch pipe 13. Thus, each opening 7 is disposed facing the engine hood 10 by means of the corresponding branch pipe 13. Referring to Fig. 4, from a top view of the vehicle, the upper hollow ends of the elastic members 8 and the openings 7 at the tip end of the branch pipes 13 are located at positions where they do not overlap with the position of the reinforcement member 14. In other words, the upper hollow ends of the elastic members 8 and the openings 7 are provided where the rigidity of the engine hood 10 is relatively low.

In the embodiment depicted in Fig. 5, the sections of the intake pipes 4 to which the branch pipes 13 are connected do not necessarily have to face the engine hood 10. The use of the branch pipes 13 in this manner allows for transmission of pressure fluctuation to the engine hood 10 even when it is difficult to provide the openings 7 facing the engine hood 10 directly in the intake pipes 4.

Generation of the air intake sound will now be described in connection with the above described embodiment. In the configuration described above, when the engine 1 is in operation, air is introduced into the engine 1 through the intake pipes 4. Since the air flows intermittently into the cylinders, the air taken into the intake pipes 4 generates a pulse, thus creating air resonance in the intake pipes 4. The air resonance increases, particularly during an acceleration period in which the amount of air taken into the engine 1 increases.

Pressure fluctuation in the intake pipes 4 produced as a result of the air resonance is transmitted to the lower surface of the engine hood 10 which is positioned above the openings 7. In response to the pressure fluctuation, the engine hood 10 vibrates vertically. Because the engine hood 10 has a large surface area, when the engine hood 10 vibrates, the engine hood 10 gives pressure fluctuation to the air with its large surface area, thereby creating a loud sound. According to this arrangement, the air intake sound is then amplified within the engine room 11 and is transmitted to the interior of the vehicle so as to be heard by a vehicle occupant. In the first embodiment, because the engine hood 10 is generally positioned close to the intake pipes 4, a long flexible tube is not necessary, thus the present embodiment achieves an efficient use of space.

Furthermore, as may be seen when viewing the vehicle from a top view (Fig. 1, Fig. 4), the vibration-transmission openings 7, the upper hollow ends of the elastic members 8, and the openings 7 at the tip end of the branch pipes 13 are located at positions where they do not to overlap with the position of the reinforcement member 14 and where the rigidity of the engine hood i10 is relatively low. Consequently, the engine hood 10 can vibrate by a greater degree, thereby improving the amplification efficiency of the air intake sound.

Fig. 3 illustrates a comparison of sound pressure levels between an embodiment of an air intake transmission provided with the openings 7 such as those provided in the embodiments described above (designated as B), and an example without the openings 7 (designated as A). As may be seen the sound pressure levels for the embodiment B is much higher than the embodiment A without the openings.

In the embodiments described herein, the vibration-transmission openings 7 are disposed facing the engine hood 10 so that the pressure fluctuation within the intake pipes 4 can be applied directly to the engine hood 10. The openings 7 are disposed close to the engine hood 10 such that the distance between the openings 7 and the engine hood 10 is kept as short as possible. This allows the engine hood 10 to vibrate more readily.

The pressure fluctuation from each opening 7 passes through the hollow portion of a corresponding elastic member 8. This passage permits the pressure fluctuation to be transmitted to the engine hood 10 efficiently and without being diffused towards the periphery of the opening 7.

Even though the openings 7 are provided in the intake pipes 4, the elastic members 8 disposed between the periphery of the openings 7 and the engine hood 10 prevent hot air of the engine 1 from being taken into the intake pipes 4 through the openings 7. Thus, the temperature of the intake air is prevented from increasing. An increase in temperature of the intake air can unfavorably lead to lower output from the engine 1.

Water from the outside of the vehicle may enter the engine room 11. However, the elastic members 8 may advantageously prevent the water from entering the intake pipes 4 through the openings 7. This is advantageous in view of the fact that water entering the intake pipes 4 can lead to an adverse effect on the engine 1. Furthermore, the elastic members 8 may also prevent foreign material from entering the intake pipes 4 through the openings 7.

Even if foreign material enters the intake pipes 4 through the openings 7, since the openings 7 are disposed between the fresh-air inlets 3 and the filters 6, the filters 6 may catch the foreign material so as to prevent it from being taken into the inlets 2 of the engine 1, thereby preventing engine failure.

As mentioned above, the air-cleaner boxes 5 serve as extended portions having a greater cross section than the intake pipes 4. Therefore, each air-cleaner box 5 functions as an extended chamber where the pressure fluctuation in the corresponding intake pipe 4 may be amplified. Consequently, by providing the openings 7 in the extended portions, the engine hood 10 may be vibrated with the amplified pressure fluctuation, whereby the amplification efficiency is increased. In particular, since the openings 7 are provided in the air-cleaner boxes 5, there is no need for providing additional extended portions as separate components.

Although the openings 7 are provided in the air-cleaner boxes 5 in the above-described described embodiment, the openings 7 may alternatively be provided in the intake pipes 4. Moreover, the number of openings 7 may be two or more. Furthermore, each of the openings 7 may alternatively be disposed between the corresponding filter 6 and the corresponding inlet 2 of the engine 1 as the elastic members 8 may also prevent foreign material and water from entering the openings 7.

The preceding description has been presented only to illustrate and describe certain embodiments of the claimed invention. It is not intended to be exhaustive or to limit the invention to any precise form disclosed. It will be understood by those skilled in the art that various changes may be made and equivalents may be substituted for elements thereof without departing from the scope of the invention. In addition, many modifications may be made to adapt a particular situation or material to the teachings of the invention without departing from the essential scope. Therefore, it is intended that the invention not be limited to the particular embodiment disclosed, but that the invention will include all embodiments falling within the scope of the claims. The invention may be practiced otherwise than is specifically explained and illustrated without departing from its scope. The scope of the invention is limited solely by the following claims.

## Claims

1. An apparatus for transmitting air intake sound comprising:
channel means (4, 5) for connection between an outside air inlet port (3) and an intake port (2) of an engine;
**characterised in that** the channel means (4, 5) comprises an opening (7) arranged, in use, to face a portion of an engine hood (10).

2. An apparatus as claimed in claim 1 comprising a pipe (13) having a first end that communicates with the channel means (4, 5) through the opening (7) and a second end having an opening (7) arranged, in use, to face a vibratory portion of the engine hood (10).

3. An apparatus as claimed in claim 1 or claim 2 comprising:
an engine hood (10) having a vibratory portion; and
an intake channel (4, 5) configured to connect an intake port (2) of an engine to a fresh-air inlet (3), wherein the intake channel (4,5) includes an opening (7) positioned at an intermediate section thereof and arranged, in use, to face the engine hood (10) such that pressure fluctuations in the intake channel (4, 5) caused by operation of the engine (1) are transmitted to the vibratory portion of the engine hood (10) through the opening (7) so as to vibrate the vibratory portion.

4. An apparatus as claimed in claim 3 wherein the intake channel (4, 5) comprises an intake pipe (4) and an extended portion (5), wherein the extended portion is in communication with the opening (7).

5. An apparatus as claimed in claim 4 wherein the extended portion (5) comprises an air-cleaner box containing a filter (6).

6. An apparatus as claimed in any of claims 3 to 5 wherein the intake channel (4, 5) includes a filter (6) disposed in the intermediate section thereof, and wherein the opening (7) is disposed between the fresh-air inlet (3) and the filter (6).

7. An apparatus as claimed in any of claims 3 to 6 wherein the intake channel (4, 5) includes a branch channel (13) and wherein the branch channel (13) has the opening (7) positioned at a tip end of the branch channel.

8. An apparatus as claimed in claim 7 wherein the intake channel (4, 5) further comprises an extended portion positioned at the intermediate section and wherein the extended portion is connected to a base end of the branch channel (13).

9. An apparatus as claimed in any preceding claim comprising an elastic member (8) that is disposed so as to surround a periphery of the opening (7), wherein the elastic member (8) extends towards the engine hood (10) and includes an end that is in contact therewith.

10. An apparatus as claimed in any preceding claim, wherein the engine hood (10) further comprises a low rigidity portion.

11. A method of transmitting an air intake sound, comprising:
introducing air into an engine (1) through an intake channel (4, 5); and
**characterised by** transmitting a pressure fluctuation in the intake channel (4, 5) through an opening (7) in the intake channel facing a vibratory portion of an engine hood (10) so as to vibrate the vibratory portion.

12. A vehicle having an apparatus or adapted to use a method as claimed in any preceding claim.

## Patentansprüche

1. Vorrichtung zum Übertragen von Luftansaugschall, die Folgendes umfasst:
Leitungsmittel (4, 5) zum Anschließen zwischen einem Außenluft-Einlasskanal (3) und einem Ansaugkanal (2) eines Motors;
**dadurch gekennzeichnet, dass** das Leitungsmittel (4, 5) eine Öffnung (7) umfasst, die dazu angeordnet ist, in Gebrauch zu einem Abschnitt einer Motorhaube (10) zu weisen.

2. Vorrichtung nach Anspruch 1, umfassend ein Rohr (13) mit einem ersten Ende, das durch die Öffnung (7) mit dem Leitungsmittel (4, 5) in Verbindung steht und einem zweiten Ende mit einer Öffnung (7), die dazu angeordnet ist, in Gebrauch zu einem Vibrationsabschnitt der Motorhaube (10) zu weisen.

3. Vorrichtung nach Anspruch 1 oder Anspruch 2, die Folgendes umfasst:
eine Motorhaube (10) mit einem Vibrationsabschnitt; und
eine Ansaugleitung (4, 5), die dazu ausgebildet ist, einen Ansaugkanal (2) eines Motors mit einem Frischlufteinlass (3) zu verbinden, wobei die Ansaugleitung (4, 5) eine an einem Zwischenabschnitt derselben positionierte Öffnung (7) umfasst, die dazu angeordnet ist, in Gebrauch zur Motorhaube (10) zu weisen, so dass durch den Betrieb des Motors (1) verursachte Druckschwankungen in der Ansaugleitung (4, 5) durch die Öffnung (7) an den Vibrationsabschnitt der Motorhaube (10) übertragen werden, um den Vibrationsabschnitt zu vibrieren.

4. Vorrichtung nach Anspruch 3, wobei die Ansaugleitung (4, 5) ein Ansaugrohr (4) und einen ausgedehnten Abschnitt (5) umfasst, wobei der ausgedehnte Abschnitt mit der Öffnung (7) in Verbindung steht.

5. Vorrichtung nach Anspruch 4, wobei der ausgedehnte Abschnitt (5) einen Luftreinigerkasten umfasst, der einen Filter (6) enthält.

6. Vorrichtung nach einem der Ansprüche 3 bis 5, wobei die Ansaugleitung (4, 5) einen Filter (6) umfasst, der im Zwischenabschnitt derselben angeordnet ist und wobei die Öffnung (7) zwischen dem Frischlufteinlass (3) und dem Filter (6) angeordnet ist.

7. Vorrichtung nach einem der Ansprüche 3 bis 6, wobei die Ansaugleitung (4, 5) eine Zweigleitung (13) umfasst and wobei die Zweigleitung (13) die an einem Spitzenende der Zweigleitung positionierte Öffnung (7) aufweist.

8. Vorrichtung nach Anspruch 7, wobei die Ansaugleitung (4, 5) weiter einen am Zwischenabschnitt positionierten ausgedehnten Abschnitt umfasst und wobei der ausgedehnte Abschnitt mit einem Basisende der Zweigleitung (13) verbunden ist.

9. Vorrichtung nach einem der vorangehenden Ansprüche, umfassend ein elastisches Glied (8), das so angeordnet ist, dass es einen Umfang der Öffnung (7) umgibt, wobei sich das elastische Glied (8) zur Motorhaube (10) hin erstreckt und ein Ende umfasst, das damit in Kontakt ist.

10. Vorrichtung nach einem der vorangehenden Ansprüche, wobei die Motorhaube (10) weiter einen Abschnitt mit geringer Steifheit umfasst.

11. Verfahren des Übertragens eines Luftansaugschalls, das Folgendes umfasst:
Einführen von Luft in einen Motor (1) durch eine Ansaugleitung (4, 5); und **gekennzeichnet durch** Übertragen einer Druckschwankung in der Ansaugleitung (4, 5) durch eine Öffnung (7) in der Ansaugleitung, die zu einem Vibrationsabschnitt einer Motorhaube (10) weist, um den Vibrationsabschnitt zu vibrieren.

12. Fahrzeug mit einer Vorrichtung nach einem der vorangehenden Ansprüche oder dazu angepasst, ein Verfahren nach einem der vorangehenden Ansprüche anzuwenden.

## Revendications

1. Appareil de transmission du son d'entrée d'air comprenant :
un moyen de canal (4, 5) pour la connexion entre un orifice d'admission d'air extérieur (3) et un orifice d'entrée (2) d'un moteur ;
**caractérisé en ce que** le moyen de canal (4, 5) comprend une ouverture (7) agencée, durant l'utilisation, pour faire face à une partie d'un capot de moteur (10).

2. Appareil selon la revendication 1, comprenant un tuyau (13) ayant une première extrémité qui communique avec le moyen de canal (4, 5) par l'intermédiaire de l'ouverture (7) et une seconde extrémité ayant une ouverture (7) agencée, durant l'utilisation, pour faire face à une partie vibratoire du capot de moteur (10).

3. Appareil selon la revendication 1 ou la revendication 2, comprenant :
un capot de moteur (10) ayant une partie vibratoire ; et
un canal d'entrée (4, 5) configuré pour connecter un orifice d'entrée (2) d'un moteur à une admission d'air frais (3), dans lequel le canal d'entrée (4, 5) comporte une ouverture (7) positionnée au niveau d'une section intermédiaire de celui-ci et agencée, durant l'utilisation, pour faire face au capot de moteur (10) de telle sorte que les fluctuations de pression dans le canal d'entrée (4, 5) causées par le fonctionnement du moteur (1) soient transmises à la partie vibratoire du capot de moteur (10) par l'intermédiaire de l'ouverture (7) de façon à faire vibrer la partie vibratoire.

4. Appareil selon la revendication 3, dans lequel le canal d'entrée (4, 5) comprend un tuyau d'entrée (4) et une partie étendue (5), dans lequel la partie étendue est en communication avec l'ouverture (7).

5. Appareil selon la revendication 4, dans lequel la partie étendue (5) comprend un boîtier de filtre à air contenant un filtre (6).

6. Appareil selon l'une quelconque des revendications 3 à 5, dans lequel le canal d'entrée (4, 5) comporte un filtre (6) disposé dans la section intermédiaire de celui-ci, et dans lequel l'ouverture (7) est disposée entre l'admission d'air frais (3) et le filtre (6).

7. Appareil selon l'une quelconque des revendications 3 à 6, dans lequel le canal d'entrée (4, 5) comporte un canal de dérivation (13) et dans lequel le canal de dérivation (13) présente l'ouverture (7) positionnée à une extrémité du canal de dérivation.

8. Appareil selon la revendication 7, dans lequel le canal d'entrée (4, 5) comprend en outre une partie étendue positionnée au niveau de la section intermédiaire et dans lequel la partie étendue est connectée à une extrémité de base du canal de dérivation (13).

9. Appareil selon l'une quelconque des revendications précédentes, comprenant un élément élastique (8) qui est disposé de façon à entourer une périphérie de l'ouverture (7), dans lequel l'élément élastique (8) s'étend vers le capot de moteur (10) et comporte une extrémité qui est en contact avec celui-ci.

10. Appareil selon l'une quelconque des revendications précédentes, dans lequel le capot de moteur (10) comprend en outre une partie de faible rigidité.

11. Procédé de transmission d'un son d'entrée d'air, comprenant :
l'introduction d'air dans un moteur (1) par l'intermédiaire d'un canal d'entrée (4, 5) ; et
**caractérisé par** la transmission d'une fluctuation de pression dans le canal d'entrée (4, 5) par l'intermédiaire d'une ouverture (7) dans le canal d'entrée faisant face à une partie vibratoire d'un capot de moteur (10) de façon à faire vibrer la partie vibratoire.

12. Véhicule ayant un appareil ou adapté pour utiliser un procédé selon l'une quelconque des revendications précédentes.
